(19) Europäisches Patentamt
European Patent Office
Office européen des brevets

(11) Publication number: **0 173 994 A2**

(12) # EUROPEAN PATENT APPLICATION

(21) Application number: 85111054.4

(22) Date of filing: 02.09.85

(51) Int. Cl.⁴: H 01 J 61/44
C 09 K 11/76

(30) Priority: 07.09.84 US 648207

(43) Date of publication of application: 12.03.86 Bulletin 86/11

(84) Designated Contracting States: DE FR GB NL

(71) Applicant: GENERAL ELECTRIC COMPANY
1 River Road
Schenectady New York 12305(US)

(72) Inventor: Gillooly, George Rice
1395 Oakridge Drive
Cleveland Heights Ohio 44121(US)

(74) Representative: Catherine, Alain et al,
General Electric - Deutschland Munich Patent Operations
Frauenstrasse 32
D-8000 München 5(DE)

(54) **Calcium halophosphate phosphor.**

(57) Improved clacium halophosphate phosphors are disclosed exhibiting increased luminous efficacy and maintenance when employed in fluorescent lamps. Said improved phosphors incorporate a small but effective amount of magnesium ion during the phosphor synthesis to provide an essentially stoichiometric or single phase composition.

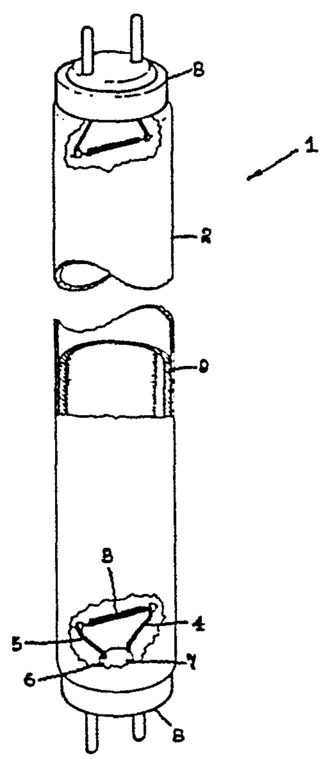

EP 0 173 994 A2

Croydon Printing Company Ltd

# CALCIUM HALOPHOSPHATE PHOSPHOR

## BACKGROUND OF THE INVENTION

This invention relates to an essentially stoichiometric class of calcium halophosphate phosphors which are particularly useful in fluorescent lamps. Calcium halophosphate phosphors have the general formula:

$$3Ca_3(PO_4)_2 \cdot CaX_2\text{: Mn, Sb}$$

wherein X is one or more halogens which includes a mixture of fluorine and chlorine. Mn is generally considered to be a primary activator while Sb is considered to be a coactivator or sensitizer, or both. The matrix or crystalline phosphor lattice is recognized to have an apatite structure and it is also recognized that such phosphors can be synthesized as an essentially stoichiometric or single-phase composition. The preparation of such stoichiometric halophosphate phosphors has been described in U.S. Patent 3,109,819, assigned to the assignee of the present invention, wherein a batch of ingredients yielding the stoichiometric composition upon firing is controlled in the amount of ingredients employed to provide the desired product. In said phosphor preparation, the batch proportions of divalent metal, phosphorus, and fluorine, when present, are as set forth in the stoichiometric composition while the batch proportions of antimony and chlorine, when present are

in slight excess over those set forth in the stoichiometric composition to compensate for volatilization losses which occur during firing to form the phosphor. The result of said phosphor preparation is relative freedom from deleterious or diluting phases otherwise present in the phosphor composition, which decrease the luminous efficacy when the phosphor product is employed in fluorescent lamps.

It is also known to introduce relatively small amounts of various other metal ions in the synthesis of calcium halophosphate phosphors for use in fluorescent lamps. For example, British Patent 733,145 discloses an incorporation of from 0.05 to 0.4 weight percent of metal ions selected from aluminum, barium, cadmium, cesium, magnesium, lead, thallium and zinc in non-stoichiometric calcium halophosphate phosphors. Said phosphors are said to maintain a ratio in the number of metal ions united with the phosphate radical to the number of such atoms present as halides of not more than 8.5 and not less than 7.5 apparently for improvement in the light output of the fluorescent lamp. The aforementioned 3,109,819 patent also discloses partial substitution of calcium ion in the stoichiometric phosphor composition with other divalent cations but without indicating any effect of such replacement on the phosphor emission characteristics. Specifically, cadmium, strontium, barium, magnesium, and zinc are disclosed to be suitable divalent cations in amounts up to 0.50 atom per mole of the phosphor composition. Calcium halophosphate phosphors said to be useful in high pressure type mercury discharge lamps are also disclosed in British Patent 1,120,372 wherein the calcium ion may be partly or entirely substituted by strontium or barium including a mixture thereof. Said phosphors are coactivated with copper and terbium ions and are said to provide a brilliant blue-green

color emission under 2537 Angstrom and 3650 Angstrom ultraviolet excitation at lamp operating temperatures up to about 400°C. There is still further disclosed in more recently issued U.S. Patent 4,075,532, also assigned to the present assignee, the combination of a particular calcium halophosphate phosphor with a more narrow band blue color emission phosphor which produces composite white color emission in a fluorescent lamp at increased luminous efficacy. Specifically, said two component phosphor combination combines the relatively more narrow blue color emission with a broader band yellow color emission from said calcium halphosphate phosphor to produce various color coordinates in the white color region at luminous efficacy values (lumens per watt) greater than experienced with single component calcium haloapatite phosphors.

Understandably, the still further improvement of luminous efficacy for calcium halophosphate phosphors in fluorescent lamp applications is desirable. A relatively modest improvement in light gain at no greater energy expenditure has significant importance in this present age of energy scarcity and high energy costs. It would be further desirable if such improvement could be achieved with a relatively minor variation in the present phosphor compositions while still utilizing the same method of phosphor preparation.

## SUMMARY OF THE INVENTION

It has now been discovered that relatively minor incorporation of magnesium ion into a stoichiometric calcium halophosphate phosphor during synthesis produces increased luminous efficacy and maintenance in fluorescent lamp products while like incorporation of other alkaline earth metal ions does not produce comparable improvement. Specifically, there is found in a particular class of calcium

halophosphate phosphors that from about 0.01 mole to about 0.06 mole of magnesium ion per mole of the stoichiometric phosphor composition achieves the desired result whereas prior art incorporation of barium ion in the same amount or greater amounts does not have such effect. Moreover, it has also been found that exceeding said controlled amounts of magnesium ion in this class of calcium halophosphate phosphors actually deteriorates the lamp performance.

Improved calcium halophosphate phosphors, according to the present invention, are characterized as having essentially the chemical formula:

$$Ca_{10-a-b-w-x}Mg_bCd_wMn_xSb_a(PO_4)_6F_{2-a-y}Cl_yO_a$$

wherein a is in the approximate range 0.02-0.20
b " " " " " 0.01-0.06
w " " " " " 0 - 0.20
x " " " " " 0.15-0.50, and
y " " " " " 0 - 0.30,

said phosphor exhibiting increased luminous efficacy and maintenance when excited by a mercury discharge to produce visible light. A representative phosphor demonstrating said improvement in a low pressure type fluorescent lamp at a cool white color point having trichromatic coordinates of approximately X = 0.377 and Y = 0.382 resides within the aforementioned stoichiometric formula at x values in the approximate range 0.15 - 0.20 and y values in the approximate range 0.05 - 0.20. A comparable improvement is achieved for a representative phosphor having a warm white lamp color point at trichromatic coordinates of X = 0.440 and Y = 0.403 wherein x and y values in the aforementioned chemical formula reside in the approximate range 0.30 - 0.50 and 0.10 - 0.25, respectively. The present improvement can also be achieved with stoichiometric calcium halophosphate phosphors when combined with other phosphors to produce

efficient white color illumination in low pressure type fluorescent lamps. For example, the particular phosphor combination disclosed in the aforementioned 4,075,532 patent is improved with substitution of a calcium halophosphate phosphor prepared according to the present invention. To further illustrate said particular improvement, the substituted phosphor component exhibits a yellow lamp color point with trichromatic coordinates of approximately X = 0.409 and Y = 0.432 when x values reside in the approximate range 0.25 - 0.50 and y values are 0 in the aforementioned chemical formula.

The presently improved phosphor materials are prepared according to the general method described in the aforementioned 3,109,819 patent. In accordance with said general method, a batch of ingredients which yields the stoichiometric phosphor composition upon firing can be employed wherein the batch proportions of divalent metal, phosphorus and fluorine are as set forth in said formula while the batch proportions of antimony and chlorine, when present, are in slight excess over that set forth in said formula. A slight excess in the fluorine content of said batch formulation is preferred for phosphors having only fluorine as the halide ion, however, due to some volatilization loss of said constituent at the elevated firing temperatures. Said batch formulation is thereafter fired in an inert atmosphere at temperatures of about 1150°C until the phosphor is formed. As further distinct from said prior art method, the present method of phosphor preparation can be carried out by a single firing using uncovered containers in an inert atmosphere or using a double firing procedure wherein the batch is first fired in covered dishes in an oxygen containing atmosphere such as air, but then crushed, blended and refired in an inert atmosphere at temperatures of about 1050°C. A suitable magnesium

source for use in the present phosphor preparation can be selected from a variety of inorganic magnesium compounds including magnesium carbonate, magnesium chloride, and magnesium nitrate.

A representative fluorescent lamp of the present invention comprises a sealed envelope enclosing means to generate a mercury discharge within said envelope to convert a major portion of the ultraviolet radiation emitted from said discharge to visible light having a white color. In preferred embodiments, said mercury discharge is a conventional low pressure discharge and the phosphor coating can be either a single phosphor having the above defined composition or a phosphor combination which includes said phosphor composition. To obtain various white color points with a single phosphor according to present invention, the manganese and antimony levels of said phosphor are adjusted in the conventional manner. For comparable white color points in a lamp employing the phosphor blend disclosed in the previously mentioned 4,075,532 patent, the calcium fluorapatite phosphor of the present invention exhibits lamp trichromatic coordinates of approximately X = 0.409 and Y = 0.432 at x values in the approximate range 0.25 - 0.50 and y values of 0.

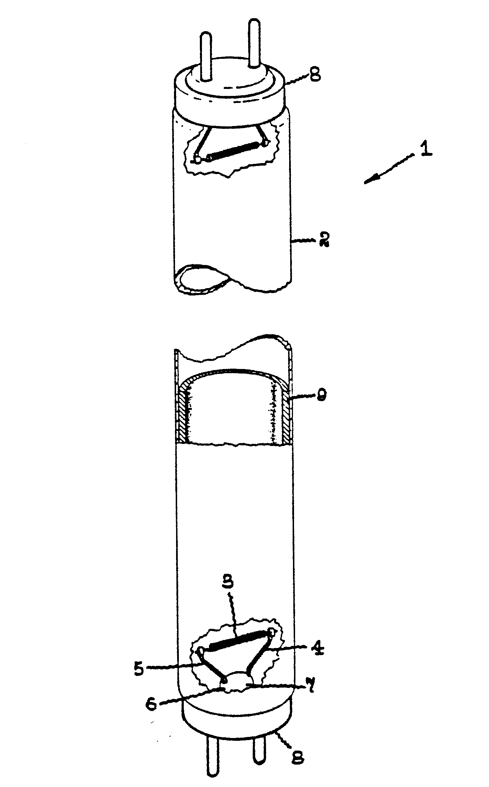

BRIEF DESCRIPTION OF THE DRAWING

In the accompanying drawing, there is shown a perspective view partially broken away of a low pressure mercury discharge fluorescent lamp construction utilizing a phosphor coating in accordance with the present invention.

DESCRIPTION OF THE PREFERRED EMBODIMENTS

Referring to the accompanying drawing, there is depicted a representative fluorescent lamp 1 comprising an elongated soda-lime silicate glass envelope 2 having a circular cross-section. The low pressure mercury discharge assembly in said lamp

includes a conventional electrode structure 3 at each end connected to in-lead wires 4 and 5 which extend through a glass press seal 6 in a mount stem 7 to the electrical contacts of a base 8 fixed at both ends of the sealed glass envelope. The discharge-sustaining filling in the sealed glass envelope is an inert gas such as argon or a mixture of argon and other rare gases at a low pressure in combination with a small quantity of mercury to provide the low vapor pressure manner of lamp operation. The inner surface of the glass bulb is provided with a coating 9 of a calcium halophosphate phosphor prepared according to the present invention and which is applied extending substantially the full length of the tube around the circumferential inner wall. To specifically illustrate the degree of improvement obtained with phosphor compositions of the present invention, a number of the fluorescent lamps having the known 40T12 construction at a nominal 40 watt rating were built and tested utilizing various phosphor coatings. The lumen values achieved in said test lamps are reported in Table I below.

TABLE I

| Example | Phosphor Composition | Coating Weight (grams/bulb) | Lumens/Watt 0 Hrs | 100 Hrs | 500 Hrs |
|---|---|---|---|---|---|
| #1 | Cool White (0.02 mole Mg/ mole/phosphor | 6.00 | 80.5 | 79.3 | - |
| #2 | " | 6.17 | 81.6 | 80.1 | - |
| #3 | " | 5.67 | 80.2 | 78.8 | - |
| #4 | Cool White (0.02 mole Ba/ mole phosphor) | 7.00 | 79.4 | 78.2 | - |
| #5 | " | 6.67 | 80.1 | 78.8 | - |
| #6 | " | 6.83 | 79.3 | 78.1 | - |
| #7 | Warm White (0.02 mole Mg/ mole phosphor) | - | 83.7 | 81.9 | 81.2 |

From the above lamp tests it can be noted that cool-white phosphors in accordance with the present invention (examples 1-3) produced more light and sustained better lumen values than prior art barium containing phosphors (examples 4-6). Remaining example 7 which is a warm white lamp utilizing a magnesium containing phosphor also in accordance with the present invention is seen to experience comparable improvement.

To still further illustrate different phosphor embodiments of the present invention, a number of the same type fluorescent lamps were constructed at a 34 watt rating wherein the phosphor coating was a phosphor blend according to the aforementioned 4,075,532 patent. More particularly, said lamps utilized a yellow color emitting calcium fluorophosphate phosphor according to the present invention mixed with a second phosphor having a relatively narrow emission spectrum in the blue color region of the visible spectrum. Suitable blue emission phosphors in said phosphor mixture include europium activated strontium chloroapatite phosphor and europium activated barium magnesium aluminate phosphor. Said test lamps all exhibited a cool white color point with trichromatic coordinates of approximately X = 0.380 and Y = 0.398. The lumen values produced with said test lamps are reported in Table II below together with identification of the particular yellow emission phosphor component being employed in said phosphor blend.

TABLE II

| Example | Phosphor | Coating Weight (grams/bulb) | Lumens/Watt 0 Hrs | Lumens/Watt 100 Hrs | Lumens/Watt 500 Hrs |
|---|---|---|---|---|---|
| #8 | Cool White Blend (0.02 mole Mg/Mole yellow phosphor) | 6.00 | 89.8 | 88.8 | 87.5 |
| #9 | Cool White Blend (0.02 mole Ba/mole yellow phosphor) | 6.40 | 86.3 | 85.3 | 85.0 |

As again can be noted from said lamp tests, a blend according to the present invention (example 8) exhibits more light output and better sustained lumen values than does a prior art blend utilizing the same level of barium ion in the yellow phosphor component.

Still further examples given below illustrate typical preparation of specific calcium halophosphate phosphors which compare magnesium ion content with barium ion content in the phosphor composition. As hereinbefore indicated, the present method of phosphor preparation mixes a batch of ingredients yielding the stoichiometric phosphor upon firing and wherein the batch proportions of divalent metal, fluorine when chlorine is present, and phosphorus are as set forth in said chemical formula while the batch proportions of antimony, chlorine, and fluorine when chlorine is not present, are in slight excess over that set forth in said formula. The batch can be fired in an inert atmosphere at about 1150°C until the phosphor is formed. Said phosphor preparation method employs an inert firing atmosphere to prevent oxidation of antimony ion to a higher valence state. On the other hand, if the phosphor is first formed by firing in air at about 1150°C, it is then desirable to crush and refire the phosphor in an inert atmosphere at about 1050°C to further improve its luminous efficacy. It is desirable to refire said phosphor below 1100°C, in order to avoid agglomeration of the phosphor particles which must then be broken up to form a suitable fluorescent lamp coating.

<u>Example 10</u>

A warm white calcium halophosphate phosphor was prepared according to the above described method by first blending a batch of the after listed ingredients in a conventional manner. The batch consisted of 6.00 moles $CaHPO_4$, 2.57 moles $CaCO_3$, 0.88 mole $CaF_2$,

0.36 mole $MnCO_3$, 0.10 mole CdO, 0.30 mole $NH_4Cl$, 0.05 mole $Sb_2O_3$, and 0.02 mole $MgCO_3$. The blended mixture of powdered ingredients was fired in covered trays at about 1160°C for about two hours. The prepared phosphor was next crushed, blended and refired at about 1050°C in an inert atmosphere of nitrogen for about two hours. The stoichiometric phosphor prepared in this manner was found to have the following formula: $Ca_{9.45}Mg_{.02}Cd_{.10}Mn_{.36}Sb_{.07}(PO_4)_6F_{1.76}Cl_{.17}O_{.07}$. Utilization of said phosphor as a coating in the above described type low pressure fluorescent lamp produced a warm white color point having trichromatic coordinates of approximately X=0.440 and Y=0.403.

Example II

A cool white calcium halophosphate phosphor was prepared in a similar manner from a batch of 6.00 moles $CaHPO_4$, 2.72 moles $CaCO_3$, 0.90 mole $CaF_2$, 0.185 mole $MnCO_3$, 0.10 mole CdO, 0.21 mole $NH_4Cl$, 0.055 mole $Sb_2O_3$, and 0.02 mole $MgCO_3$. This batch was fired in uncovered dishes in an inert atmosphere at about 1150°C for approximately two hours. The stoichiometric phosphor prepared in this manner had the following chemical formula: $Ca_{9.62}Mg_{.02}Cd_{.10}Mn_{.185}Sb_{.075}(PO_4)_6F_{1.80}Cl_{.125}O_{.075}$. A low pressure fluorescent lamp utilizing said phosphor coating produced a cool white color point with trichromatic coordinates of approximately X=0.377 and Y=0.382.

Example 12

A yellow color emitting calcium fluorophosphate phosphor was prepared from a batch of ingredients consisting of 6.00 moles $CaHPO_4$, 2.55 moles $CaCO_3$. 0.98 mole $CaF_2$ 0.28 mole $MnCO_3$, 0.10 mole CdO, 0.04 mole $Sb_2O_3$. and 0.02 mole $MgCO_3$. This batch was fired in covered dishes at about 1160°C for about 2.5 hours and the prepared phosphor then

crushed, blended and refired at about 1050°C in an inert atmosphere of nitrogen for approximately two hours. The stoichiometric phosphor prepared in this manner had the following chemical formula:

$Ca_{9.53}Mg_{.02}Cd_{.10}Mn_{.28}Sb_{.07}(PO_4)_6F_{1.93}O_{.07}$

Approximately 95 grams of said above phosphor were admixed with 5 grams of the SECA phosphor described in the aforementioned 4,075,532 patent to produce a coating in a low pressure fluorescent lamp yielding a cool white color point with trichromatic coordinates in the range X=0.379-0.380 and Y=0.396-0.398.

It will be apparent from the foregoing description that while specific examples have been provided on the phosphors, lamps and methods used in the practice of the present invention, that various modifications thereof can be made within the spirit and scope of the present invention. Consequently, it is intended to limit the present invention only by the scope of the following claims:

CLAIMS:

What I claim as new and desire to secure by Letters Patent of the United States is:

1. A calcium halophosphate phosphor having essentially the chemical formula:

$$Ca_{10-a-b-w-x}Mg_bCd_wMn_xSb_a(PO_4)_6F_{2-a-y}Cl_yO_a$$

wherein a is in the approximate range 0.02-0.20
" b " " " " " 0.01-0.06
" w " " " " " 0 - 0.20
" x " " " " " 0.15-0.50, and
" y " " " " " 0 - 0.30,

said phosphor exhibiting increased luminous efficacy and maintenance when excited by a mercury discharge to produce visible light.

2. A phosphor as in Claim 1 exhibiting a cool white color point when used in a fluorescent lamp wherein x is in the approximate range 0.15-0.20 and y is in the approximate range 0.05-0.20.

3. A phosphor as in Claim 2 wherein said cool white color point has trichromatic coordinates of approximately X = 0.377 and Y=0.382.

4. A phosphor as in Claim 1 exhibiting a warm white color point when used in a fluorescent lamp wherein x is in the approximate range 0.30-0.50 and y is in the approximate range 0.10-0.25.

5. A phosphor as in Claim 4 wherein said warm white color point has trichromatic coordinates of approximately X=0.440 and Y=0.403.

6. A phosphor as in Claim 1 exhibiting a yellow color point when used in a fluorescent lamp wherein x is in the approximate range 0.25-0.50 and y is zero.

7. A phosphor as in claim 6 wherein said yellow color point has trichromatic coordinates of X=0.409 and Y=0.432.

8. In a fluorescent lamp of the type having a sealed envelope enclosing means to generate a mercury discharge within said envelope, and a coating contained within said envelope for conversion of a major portion of the ultraviolet radiation emitted from said discharge to visible light, the improved coating comprising a calcium halophosphate phosphor having essentially the chemical formula:

$Ca_{10-a-b-w-x}Mg_bCd_wMn_xSb_a(PO_4)_6F_{2-a-y}Cl_yO_a$

wherein a is in the approximate range 0.02-0.20
" b " " " " " 0.01-0.06
" w " " " " " 0 - 0.20
" x " " " " " 0.15-0.50, and
" y " " " " " 0 - 0.30,

said phosphor exhibiting increased luminous efficacy and maintenance when excited by said mercury discharge to produce visible light having a white color.

9. A fluorescent lamp as in Claim 8 having a cool white color point with trichromatic coordinates of approximately X=0.377 and Y=0.382 wherein x is in the approximate range 0.15-0.20 and y is in the approximate range 0.05-0.20.

10. A fluorescent lamp as in Claim 8 having a warm white color point with trichromatic coordinates of approximately X=0.440 and Y=0.403 wherein x is in the approximate range 0.30-0.50 and y is in the approximate range 0.10-0.25.

11. A fluorescent lamp as in Claim 8 wherein said phosphor has a yellow color point with trichromatic coordinates of approximately X=0.409 and

Y=0.432 along with x residing in the approximate range 0.25-0.50 and y being zero, said phosphor being further combined with another phosphor exhibiting relatively narrow blue color emission.

12. A fluorescent lamp as in Claim 11 wherein said phosphor combination is a blended mixture.

13. A fluorescent lamp as in Claim 11 wherein said phosphor exhibiting relatively narrow blue color emission is a europium activated strontium chloroapatite phosphor.

14. A fluorescent lamp as in Claim 11 wherein said phosphor exhibiting relatively narrow blue color emission is a europium activated barium magnesium aluminate phosphor.

15. A fluorescent lamp as in Claim 8 wherein said mercury discharge is a low pressure mercury discharge.

16. A method for the preparation of a haloapatite phosphor having essentially the chemical formula:

$$Ca_{10-a-b-w-x}Mg_bCd_wMn_xSb_a(PO_4)_6F_{2-a-y}Cl_yO_a$$

wherein a is in the approximate range 0.02-0.20
" b " " " " " 0.01-0.06
" w " " " " " 0 - 0.20
" x " " " " " 0.15-0.50, and
" y " " " " " 0 - 0.30,

which comprises (1) mixing a batch of ingredients which will yield the said phosphor material upon firing and wherein the batch proportions of divalent metal, fluorine when chlorine is present, and phosphorus are as set forth in said formula while the batch

proportions of antimony, chlorine, and fluorine when chlorine is not present, are in slight excess over that set forth in said formula, and (2) firing the batch at a temperature of about 1150°C until the phosphor is formed.

17. The method of Claim 17 wherein the phosphor is crushed, blended and refired in an inert atmosphere.

0173994

1/1